# EUROPEAN PATENT APPLICATION

(11) **EP 2 315 445 A1**
(43) Date of publication of application: **27.04.2011**
(21) Application number: 09172651.3
(22) Date of filing: 09.10.2009
(51) Int. Cl.: H04N 7/26, H04N 7/50, H04N 7/08

(54) **Video compression**

(71) Applicant: Vidast Oy, 90100 Oulu (FI)
(72) Inventor: Simula, Helge, 94200, Kemi (FI)
(74) Representative: Pykälä, Timo Tapani

(57) **Abstract**

Video compression apparatus, method, and computer program. The method comprises: upscaling (1002) an initial frame into an enlarged frame in such a manner that the pixel resolution of the enlarged frame is bigger than the pixel resolution of the initial frame; video-compressing (1004) the enlarged frame into a compressed enlarged frame; downscaling (1006) the compressed enlarged frame into a diminished frame in such a manner that the pixel resolution of the diminished frame is smaller than the pixel resolution of the enlarged frame; video-compressing (1008) the diminished frame into a compressed diminished frame.

## Description

### Field

The invention relates to video compression with an apparatus, a method, and a computer program.

### Background

Video compression reduces the quantity of data representing video images. It may be realized by a combination of image compression and motion compensation. MPEG (Moving Picture Experts Group), for example, sets video compression standards.

As transmission of video images over data networks is increasing, further development of video compression is desirable. When the density provided by video compression becomes high enough, various disturbances, especially blocking artifacts, begin to occur in video images. Blocking artifacts show in the video images along the block borders. Therefore, there is a need to provide better than before video compression techniques in which the quality of the video images remains good even at high compression densities.

### Brief description

According to an aspect of the present invention, there is provided an apparatus as specified in claim 1.

According to another aspect of the present invention, there is provided a method as specified in claim 3.

According to another aspect of the present invention, there is provided a computer program as specified in claim 5.

According to another aspect of the present invention, there is provided a computer program on a carrier as specified in claim 6.

According to another aspect of the present invention, there is provided another apparatus as specified in claim 7.

### List of drawings

Embodiments of the present invention are described below, by way of example only, with reference to the accompanying drawings, in which
Figures 1, 2, 3, 4, and 5 illustrate embodiments of an apparatus;
Figures 6, 7, and 10 illustrate embodiments of a method; and
Figures 8 and 9 illustrate the principle of scaling.

### Description of embodiments

The following embodiments are exemplary. Although the specification may refer to "an" embodiment in several locations, this does not necessarily mean that each such reference is to the same embodiment, or that the feature only applies to a single embodiment. Single features of different embodiments may also be combined to provide other embodiments.

The present invention is applicable to any video compression standard or proprietary video compression technique that supports the functionality that will be described in the following. The standards and specifications of video compression systems develop rapidly. Such development may require extra changes to an embodiment. Therefore, all words and expressions should be interpreted broadly and they are intended to illustrate, not to restrict, the embodiment.

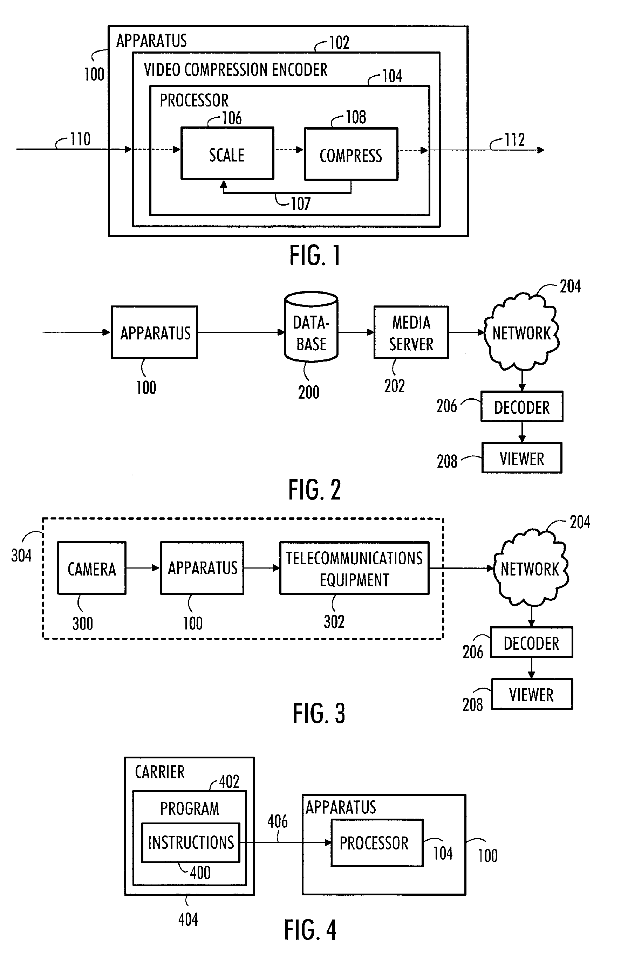

Figures 1 to 5 only show some elements whose implementation may differ from what is shown. The connections shown in Figures 1 to 5 are logical connections; the actual physical connections may be different. Interfaces between the various elements may be implemented with suitable interface technologies, such as a message interface, a method interface, a sub-routine call interface, a block interface, or any means enabling communication between functional sub-units. It should be appreciated that apparatuses may comprise other units. However, they are irrelevant to the actual invention and, therefore, they need not be discussed in more detail here. It is also to be noted that although some elements are depicted as separate, some of them may be integrated into a single physical element.

With reference to Figure 1, an apparatus 100 is described. With the apparatus 100, it is possible to video-compress video images 110. The description is simplified, since, for a person skilled in the art, video compression is well known on the basis of standards and textbooks. For instance, it is possible to read about the MPEG standard on the home pages of the MPEG organization (when this was written, the address was http://www.chiariglione.org/mpeg/). Further information on an encoder and its implementation is available in numerous patents, in US patent 5,760,836, incorporated herein by reference, for example.

Video images 110 may be formed with a camera, for instance a digital video camera. In a digital video camera, the objective directs light not to a film, but to an image sensor, which may be a CCD (Charge-Coupled Device) sensor, or a CMOS (Complementary Metal-Oxide-Semiconductor) active-pixel sensor, for example. Each electrode in a CCD cell may store one picture element, i.e., pixel. A typical number of pixels in one image may vary from a few hundred thousands to millions, or even more as the technology advances.

Naturally, the video images 110 may already have been formed quite a long time before they are fed into the apparatus 100. In such a case, the video images 110 may have been stored onto a suitable storage medium, such as a DVD (Digital Versatile Disc), CD-ROM (Compact Disc Read-Only memory), hard disk of a computer, memory of a subscriber terminal of a radio system, a USB (Universal Serial Bus) flash drive, or some other storage medium, for example a memory circuit. The video images 110 may also be received over a telecommunications connection, such as the radio interface of a radio system or the Internet.

The video images 110 may be inputted into the apparatus 100 through any suitable communication interface. In an embodiment, Firewire (IEEE 1394) interface is utilized. Another embodiment uses a Serial Digital Interface (SDI), according to SMPTE 259M standard, for example. Also other suitable standard/proprietary interfaces may be utilized to feed the video images 110 into the apparatus 100.

The apparatus 100 comprises a processor 104. The processor 104 is configured to perform two operations in succession: a scaling operation 106, and a compression operation 108. These operations may be iterated 107 for a number of times. In an embodiment, the processor 104 is configured to perform the iteration two times. This may be implemented in such a manner that the processor 104 is configured to first upscale an initial frame into an enlarged frame in such a manner that the pixel resolution of the enlarged frame is bigger than the pixel resolution of the initial frame, whereupon the enlarged frame is video-compressed into a compressed enlarged frame. Next, the processor 104 is configured to downscale the compressed enlarged frame into a diminished frame in such a manner that the pixel resolution of the diminished frame is smaller than the pixel resolution of the enlarged frame, whereupon the diminished frame is video-compressed into a compressed diminished frame.

In another embodiment, the processor 104 is configured to perform the iteration three times. This may be implemented in such a manner that the processor 104 is configured to scale an initial frame into a large frame in such a manner that the pixel resolution of the large frame is bigger than the pixel resolution of the initial frame, to video-compress the large frame into a compressed large frame, to scale the compressed large frame into a medium frame in such a manner that the pixel resolution of the medium frame is bigger than the pixel resolution of the initial frame but smaller than the pixel resolution of the large frame, to video-compress the medium frame into a compressed medium frame, to scale the compressed medium frame into a small frame in such a manner that the pixel resolution of the small frame is smaller than the pixel resolution of the medium frame, and to video-compress the small frame into a compressed small frame.

Naturally, besides performing the iteration two or three times, more iterations may be performed as required by the desired result. Even though it appears that the scaling and compression operations are performed in succession, they may also be performed in combination, i.e. scaling and compression may be an integrated operation, wherein the processing appears as if performed in parallel.

Scaling refers to an operation wherein a frame is converted from one pixel resolution to another: upscaling increases the pixel resolution, whereas downscaling reduces the pixel resolution. Video scaling may be implemented with various techniques, such techniques including suitable processing and/or filtering. As the pixel resolution is increased, extra pixels are added to the frame. The values for these pixels may be calculated from the existing pixels according to a predetermined scheme. As the pixel resolution is decreased, some pixels are removed from the frame. The values of the removed pixels may affect the values of the remaining pixels according to another predetermined scheme.

The apparatus 100 may be an electronic digital computer, which may comprise, besides the processor 104, a working memory, and a system clock. Furthermore, the computer may comprise a number of peripheral devices, such as a non-volatile memory, an input interface, and a user interface (such as a pointing device, a keyboard, a display, etc.). The user interface may be used for user interaction: for viewing the video, for example. Naturally, the computer may comprise a number of other peripheral devices, not illustrated here for the sake of clarity.

The system clock constantly generates a stream of electrical pulses, which cause the various transferring operations within the computer to take place in an orderly manner and with specific timing.

Depending on the processing power needed, the computer may comprise several (parallel) processors 104, or the required processing may be distributed amongst a number of computers. The computer may be a laptop computer, a personal computer, a server computer, a mainframe computer, or any other suitable computer. As the processing power of portable communications terminals, such as mobile phones, is constantly increasing, the apparatus 100 functionality may be implemented into them as well. It is to be noted that the apparatus 100 functionality may be implemented, besides in computers, in any other suitable data processing equipment as well.

The term 'processor' refers to a device that is capable of processing data. The processor 104 may comprise an electronic circuit or electronic circuits implementing the required functionality, and/or a microprocessor or microprocessors running a computer program implementing the required functionality. When designing the implementation, a person skilled in the art will consider the requirements set for the size and power consumption of the apparatus, the necessary processing capacity, production costs, and production volumes, for example. The electronic circuit may comprise logic components, standard integrated circuits, application-specific integrated circuits (ASIC), and/or other suitable electronic structures.

The microprocessor 104 implements functions of a central processing unit (CPU) on an integrated circuit. The CPU is a logic machine executing a computer program, which comprises program instructions. The program instructions may be coded as a computer program using a programming language, which may be a high-level programming language, such as C, or Java, or a low-level programming language, such as a machine language, or an assembler. The CPU may comprise a set of registers, an arithmetic logic unit (ALU), and a control unit (CU). The control unit is controlled by a sequence of program instructions transferred to the CPU from the working memory. The control unit may contain a number of microinstructions for basic operations. The implementation of the microinstructions may vary, depending on the CPU design. The microprocessor 104 may also have an operating system (a dedicated operating system of an embedded system, or a real-time operating system), which may provide the computer program with system services.

There may be three different types of buses between the working memory and the processor: a data bus, a control bus, and an address bus. The control unit uses the control bus to set the working memory in two states, one for writing data into the working memory, and the other for reading data from the working memory. The control unit uses the address bus to send to the working memory address signals for addressing specified portions of the memory in writing and reading states. The data bus is used to transfer data from the working memory to the processor and from the processor to the working memory, and to transfer the instructions from the working memory to the processor.

The working memory may be implemented as a random-access memory (RAM), where the information is lost after the power is switched off. The RAM is capable of returning any piece of data in a constant time, regardless of its physical location and whether or not it is related to the previous piece of data. The data may comprise video data, any temporary data needed during the compression, program instructions, etc.

The non-volatile memory retains the stored information even when not powered. Examples of non-volatile memory include read-only memory (ROM), flash memory, magnetic computer storage devices such as hard disk drives, and optical discs. The non-volatile memory may store both video data and a computer program comprising program instructions.

An embodiment, illustrated in Figure 4, provides a computer program 402 comprising program instructions 400 which, when loaded into the apparatus 100, cause the apparatus 100 to upscale an initial frame into an enlarged frame in such a manner that the pixel resolution of the enlarged frame is bigger than the pixel resolution of the initial frame, to video-compress the enlarged frame into a compressed enlarged frame, to downscale the compressed enlarged frame into a diminished frame in such a manner that the pixel resolution of the diminished frame is smaller than the pixel resolution of the enlarged frame.

The computer program 402 may be in source code form, object code form, or in some intermediate form. The computer program 402 may be stored in a carrier 404, which may be any entity or device capable of carrying 406 the program to the apparatus 100. The carrier 404 may be implemented as follows, for example: the computer program 402 may be embodied on a record medium, stored in a computer memory, embodied in a read-only memory, carried on an electrical carrier signal, carried on a telecommunications signal, and/or embodied on a software distribution medium. In some jurisdictions, depending on the legislation and the patent practice, the carrier 404 may not be the telecommunications signal.

Figure 4 illustrates that the carrier 404 may be coupled with the apparatus 100, whereupon the program 402 comprising the program instructions 400 is transferred into the non-volatile memory of the apparatus 100. The program 402 with its program instructions 400 may be loaded from the non-volatile memory into the working memory. During running of the program 402, the program instructions 400 are transferred via the data bus from the working memory into the control unit of the processor 104, wherein usually a portion of the instructions 400 resides and controls the operation of the apparatus 100.

There are many ways to structure the program 402. The operations of the program may be divided into functional modules, sub-routines, methods, classes, objects, applets, macros, etc., depending on the software design methodology and the programming language used. In modern programming environments, there are software libraries, i.e. compilations of ready made functions, which may be utilized by the program for performing a wide variety of standard operations.

Basically, the software 402 may be implemented in such a manner that an existing video encoder software is controlled in such a manner that the scaling and compression operations are performed with appropriate already existing library function calls in the earlier explained sequence.

When the video-compressed frame 112 needs to be viewed, it is decoded with a suitable decoder. The video-compressed frame 112 may be decoded with an ordinary decoder that requires no changes on account of the described expansion. The decoder does not even need to know that the video-compressed frame 112 is encoded using the new type of encoding with the scaling and compression. Thus, the encoding may be done with any prior-art encoding using the scaling and compression described above, and the decoding may be done with normal, prior-art decoding designed to match the encoding.

The apparatus 100 may, in fact, be a video compression encoder, or, as illustrated in Figure 1, the apparatus 100 may comprise a video compression encoder 102. The video compression encoder 102 may operate according to a video compression standard. The novel video compression encoder 102 may be used in all applications in which a conventional prior-art encoder may be used. The video compression encoder 102 may also be connected to a video compression decoder, in which case the device may be called a video compression codec.

If the apparatus 100 is a mobile terminal, a laptop, a PDA (Personal Digital Assistant), or the like, the earlier described electronic digital computer may naturally be miniaturized.

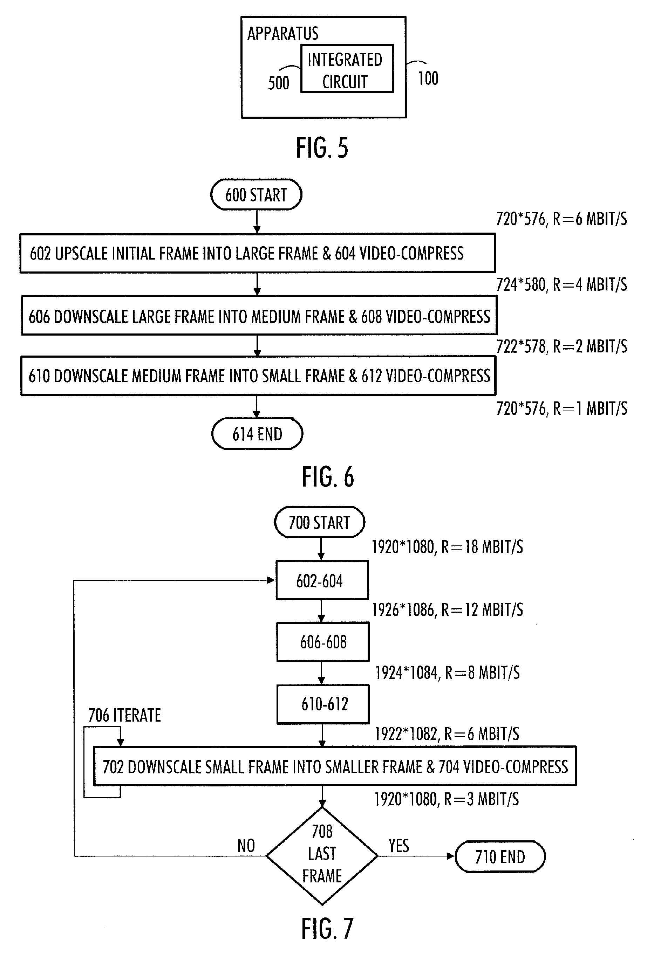

As illustrated in Figure 5, the apparatus 100 may also comprise one or more integrated circuits 500, such as application-specific integrated circuits ASIC, which process video images as earlier described. Other hardware embodiments are also feasible, such as a circuit built of separate logic components. A hybrid of these different implementations is also feasible. When selecting the method of implementation, a person skilled in the art will consider the requirements set for the size and power consumption of the apparatus 100, necessary processing capacity, production costs, and production volumes, for example.

In Figure 2, video images are encoded with the apparatus 100, and the encoded video images are stored in a database 200. A media server 202 fetches the encoded video images from the database 200 and transmits them through a data transmission network 204 to a recipient that has a decoder 206 for decoding the encoded video images and a viewer 208 for displaying the decoded video images. The viewer 208 may comprise a display for displaying the image and a loudspeaker for reproducing sound. In the manner shown in Figure 2, it is for instance possible to encode television programmes and transmit them to a television receiver that contains the decoder 206 and the viewer 208. The data transmission network 204 may then at least partly be made up of a cable television network, or it may any other suitable network such as the Internet.

In the manner shown in Figure 2, it is also possible to encode television programmes and transmit them to a subscriber terminal that contains the decoder 206 and the viewer 208. The data transmission network 204 is then at least partly made up of a radio system. The transmission of encoded video images in a radio system may be performed in a packet-switched or in a circuit-switched manner. The wireless transmission may be implemented with a wireless transceiver operating according to the GSM (Global System for Mobile Communications), WCDMA (Wideband Code Division Multiple Access), WLAN (Wireless Local Area Network) or Bluetooth® standard, or any other suitable standard/non-standard wireless communication means. Besides being implemented in a radio system with a fixed network infrastructure, the embodiments may be applied to an *ad hoc* communication network as well. In an *ad hoc* communication network, a terminal equipped with a short-range wireless transceiver operating without a fixed network infrastructure may communicate with another terminal.

Figure 2 also shows an embodiment in which video programmes, such as films, stored on DVD, for instance, are stored in the database 200, and the media server 202 then implements a video hire system operating over the data transmission network 204, such as the Internet. The videos to be hired are then encoded in the described manner, and the customer selects the desired film from the media server 202 and the film is transmitted in the encoded form over the data transmission network 204 to the viewer's terminal that contains the decoder 206 and the viewer 208, the terminal being for instance a television set, a computer, or a subscriber terminal of a radio system.

In Figure 3, the apparatus 100 is placed in the subscriber terminal 304 of a radio system, for instance in a mobile phone that contains a digital camera 300. The mobile phone 304 also has telecommunications equipment 302, i.e., in practice a transceiver for transmitting encoded video images through the radio system 204 to other devices that contain the decoder 206 and the viewer 208. The device 304 shown in Figure 3 may also be a computer with the digital camera 300 and the data transmission equipment 302. The data transmission network 204 may then be the Internet, for instance.

The video images may form a high-definition television (HDTV) stream. Full HD may be 1080p, for example, which means a pixel resolution of 1920x1080, or 2,073,600 pixels in total. The letter p stands for progressive scan (meaning the image is not interlaced as in 1080i). The frame rate may be 30 Hertz, for example. Other HD resolutions may naturally be used as well, such as 1280x720 pixels. Naturally, there is a bewildering choice of other pixel resolutions as well, all of which may be applied to the embodiments. The encoder may operate according to H.264, or MPEG-4 Part 10, i.e. it may be a MPEG-4 AVC. The encoder may be based on an x264 open source encoder, for example. The video images may also form a standard-definition (SD) television stream, using 720x576 pixels, for example.

In video compression, an individual video image is divided into blocks of certain size. One block may comprise information on luminance, colour, and location. Compression is based on removing the less significant data. Compression methods may be divided into three different classes: reducing spectral redundancy, reducing space redundancy, and reducing temporal redundancy. A YUV colour scheme, which is based on the fact that the human eye is more sensitive to changes in luminance, i.e., brightness, than chrominance, i.e., colour, may be used to reduce spectral redundancy. The YUV scheme has for instance one luminance component (Y) and two chrominance components (U, V). The size of a luminance block may for instance be 16 x 16 pixels, and the size of each chrominance block, which covers the same area as the luminance block, may be 8 x 8 pixels. A combination of luminance and chrominance blocks covering the same area may be called a macroblock. Each pixel in both the luminance and chrominance block may obtain a value within the range of 0 to 255, i.e., eight bits are required to display one pixel. For instance, the value 0 of a luminance pixel means black and the value 255 means white. Discrete cosine transformation (DCT) may be used to reduce space redundancy. In discrete cosine transformation, the pixel presentation of the block is transformed to a frequency range. Discrete cosine transformation is lossless transformation. Temporal redundancy may be reduced with motion compensation prediction. Consecutive images usually resemble each other, so instead of compressing each individual image, block motion data, which defines where some of the areas in the previous image moved in the next image, and error components, which define the error between the compressed and actual image, are generated. This encoding description does not, however, go into more detail, since the apparatus 100 being described may use all such known encoding methods that result, when encoding the image, in lossy compression. Lossy compression may be achieved with quantization that reduces the number of bits that are used in encoding the values of different frequency ranges. The human eye is less sensitive to higher frequencies, so they may be quantized more. Quantizing may be implemented for instance by dividing DCT coefficients by a specific quantizing parameter so that less significant bits disappear from each DCT coefficient. The quantizing parameter may vary for each macro block. The more often the quantized DCT coefficients obtain the value 0, the better the compression. Quantized DCT coefficients, motion vectors, and quantizing parameters may then be encoded using run-length coding and variable-length coding, such as Huffman coding.

Next, a method will be described with reference to Figures 6, 7, and 10. The method relates to video compression. With the method, it is possible to compress video images with a much higher compression density than when using the prior-art encoding methods without substantial deterioration in the image quality. Especially blocking artifacts are reduced significantly when using the presented method. Other operations, besides those described in Figures 6, 7, and 10 may also be executed between the operations or within the operations.

The method may be implemented as the apparatus 100, or the computer program 402 comprising program instructions 400 which, when loaded into the apparatus 100, cause the apparatus 100 to perform the process to be described. The embodiments of the apparatus 100 may also be used to enhance the method, and, correspondingly, the embodiments of the method may be used to enhance the apparatus 100.

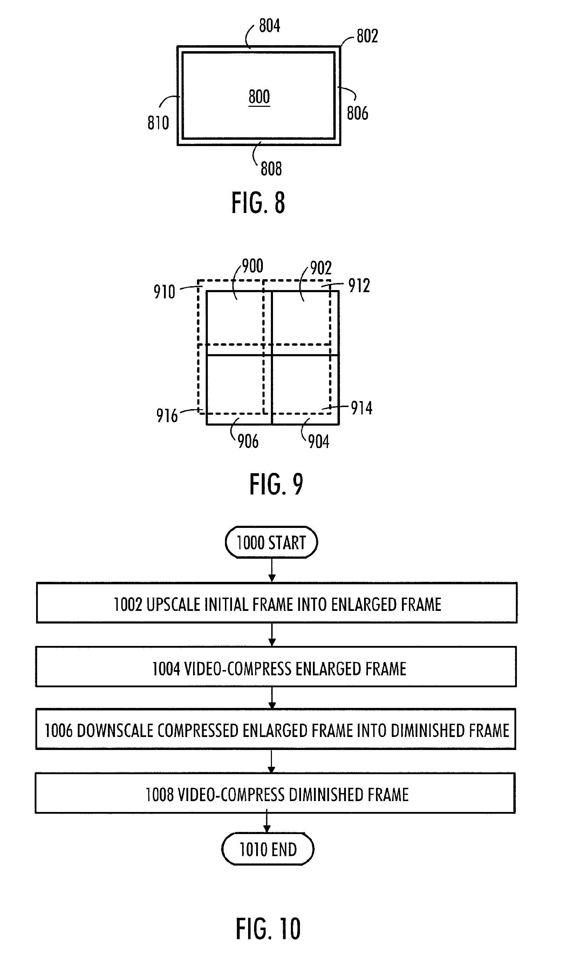

The embodiment of Figure 10 starts in 1000 and ends in 1010.

In 1002, an initial frame is upscaled into an enlarged frame in such a manner that the pixel resolution of the enlarged frame is bigger than the pixel resolution of the initial frame. The resulting enlarged frame is video-compressed into a compressed enlarged frame in 1004

In 1006, the compressed enlarged frame is downscaled into a diminished frame in such a manner that the pixel resolution of the diminished frame is smaller than the pixel resolution of the enlarged frame. The resulting diminished frame is video-compressed into a compressed diminished frame in 1008.

As noted earlier, the scaling and video-compressing may also be performed in combination, i.e. upscaling and video-compressing may be performed like one operation, and, correspondingly, downscaling and video-compressing may be performed like one operation.

The upscaling and downscaling may be performed in such a manner that block borders within the diminished frame are displaced from places where they were in the enlarged frame.

The embodiment of Figure 6 starts in 600 and ends in 614.

In 602, an initial frame is upscaled into a large frame in such a manner that the pixel resolution of the large frame is bigger than the pixel resolution of the initial frame.

Figure 8 illustrates one embodiment of how the initial frame 800 may be expanded by scaling. After the scaling, pixel resolution of the initial frame 800 is expanded as shown with expanded borderline 802. For example, if the initial pixel resolution is 720x576 pixels, the scaling may result in an expanded pixel resolution of 724x580 pixels.

As illustrated in Figure 8, the expanded borderline 802 may comprise an additional outer row 804, 808 of pixels, and an additional outer column 806, 810 of pixels.

The scaling may be performed in such a manner that block borders within the medium frame are displaced from places where they were in the large frame, and block borders within the small frame are displaced from places where they were in the medium frame and in the large frame. The block borders may be borders between square-shaped groups of neighbouring pixels. Such groups may be macroblocks. Figure 9 illustrates how the block borders (depicted with dotted lines) of blocks 910, 912, 914, 916 belonging to the initial frame expanded by scaling are displaced from the block borders (depicted with solid lines) of blocks 900, 902, 904, 906 belonging to the initial frame before scaling. This reduces the blocking artifacts shown in the encoded video images.

In 604, the large frame is video compressed into a compressed large frame. As shown in Figure 6, the initial bit rate of 6 Megabits/second (Mbit/s) is reduced to 4 Mbit/s.

In 606, the compressed large frame is downscaled into a medium frame in such a manner that the pixel resolution of the medium frame is bigger than the pixel resolution of the initial frame but smaller than the pixel resolution of the large frame. In an embodiment, the pixel resolution is reduced into 722x578 pixels. In 608, the medium frame is video-compressed into a compressed medium frame. As shown in Figure 6, the bit rate may be reduced to 2 Mbit/s.

In 610, the compressed medium frame is downscaled into a small frame in such a manner that the pixel resolution of the small frame is smaller than the pixel resolution of the medium frame, and in 612, the small frame is video-compressed into a compressed small frame. The final frame resolution is 720x576 pixels, and the final bit rate is 1 Mbit/s. The final frame resolution may thus be the same as the initial frame resolution. But in another embodiment, the final frame resolution may also be other than the initial frame resolution, whereby the final frame may be better fitted to the dimensions of a display used to view the encoded frame stream.

Figure 7 illustrates that the method may be performed in a looping fashion. A test may be performed in 708: if the last frame has been processed, the method is ended, otherwise the method continues for the next frame from 602. The method in Figure 7 starts in 700, and ends in 710.

Figure 7 also illustrates that there may well be a larger number of iterations than in Figure 6: instead of three iterations of Figure 6, in Figure 7 there are four iterations.

Operations 602-604-606-608-610-612 are as in Figure 6. Furthermore, in 702, the compressed small frame is downscaled into a smaller frame in such a manner that the pixel resolution of the smaller frame is smaller than the pixel resolution of the small frame, and in 704, the smaller frame is video-compressed into a compressed smaller frame. As shown in Figure 7, there may also be a number of further iterations 706, each iteration including scaling and video-compressing.

Figure 6 illustrates SD encoding, whereas Figure 7 illustrates HD encoding. The initial frame resolution of 1920x1080 pixels, and the initial bit rate of 18 Mbit/s, changes as follows with the iterations:
- 1926x1086 pixels, and 12 Mbit/s;
- 1924x1084 pixels, and 8 Mbit/s;
- 1922x1082 pixels, and 6 Mbit/s; and
- 1920x1080 pixels, and 3 Mbit/s.

Naturally, all such numerical values are only used to illustrate the operating principles behind the embodiments, and they may be adapted as required to obtain the desired effect. The factors affecting the encoding decisions include, for example: desired quality, available processing time, available processing capacity, available bit rate, desired resolution etc.

It will be obvious to a person skilled in the art that, as technology advances, the inventive concept can be implemented in various ways. The invention and its embodiments are not limited to the examples described above but may vary within the scope of the claims.

## Claims

1. An apparatus comprising:
means for upscaling an initial frame into an enlarged frame in such a manner that the pixel resolution of the enlarged frame is bigger than the pixel resolution of the initial frame;
means for video-compressing the enlarged frame into a compressed enlarged frame;
means for downscaling the compressed enlarged frame into a diminished frame in such a manner that the pixel resolution of the diminished frame is smaller than the pixel resolution of the enlarged frame; and
means for video-compressing the diminished frame into a compressed diminished frame.

2. The apparatus of claim 1, wherein the means for upscaling and the means for downscaling operate in such a manner that block borders within the diminished frame are displaced from places where they were in the enlarged frame.

3. A method comprising:
upscaling an initial frame into an enlarged frame in such a manner that the pixel resolution of the enlarged frame is bigger than the pixel resolution of the initial frame;
video-compressing the enlarged frame into a compressed enlarged frame;
downscaling the compressed enlarged frame into a diminished frame in such a manner that the pixel resolution of the diminished frame is smaller than the pixel resolution of the enlarged frame; and
video-compressing the diminished frame into a compressed diminished frame.

4. The method of claim 3, further comprising:
performing the upscaling and downscaling in such a manner that block borders within the diminished frame are displaced from places where they were in the enlarged frame.

5. A computer program comprising program instructions which, when loaded into an apparatus, cause the apparatus to perform the process of claim 3 or 4.

6. A computer program on a carrier, comprising program instructions which, when loaded into an apparatus, cause the apparatus
to upscale an initial frame into an enlarged frame in such a manner that the pixel resolution of the enlarged frame is bigger than the pixel resolution of the initial frame,
to video-compress the enlarged frame into a compressed enlarged frame,
to downscale the compressed enlarged frame into a diminished frame in such a manner that the pixel resolution of the diminished frame is smaller than the pixel resolution of the enlarged frame, and
to video-compress the diminished frame into a compressed diminished frame.

7. An apparatus comprising a processor configured
to upscale an initial frame into an enlarged frame in such a manner that the pixel resolution of the enlarged frame is bigger than the pixel resolution of the initial frame,
to video-compress the enlarged frame into a compressed enlarged frame,
to downscale the compressed enlarged frame into a diminished frame in such a manner that the pixel resolution of the diminished frame is smaller than the pixel resolution of the enlarged frame, and
to video-compress the diminished frame into a compressed diminished frame.

## Amended claims

### Amended claims in accordance with Rule 137(2) EPC.

**1.** An apparatus comprising:
means for upscaling an initial frame into an enlarged frame in such a manner that the pixel resolution of the enlarged frame is bigger than the pixel resolution of the initial frame;
means for video-compressing the enlarged frame into a compressed enlarged frame;
means for downscaling the compressed enlarged frame into a diminished frame in such a manner that the pixel resolution of the diminished frame is smaller than the pixel resolution of the enlarged frame; and
means for video-compressing the diminished frame into a compressed diminished frame.

**2.** The apparatus of claim 1, wherein the means for upscaling and the means for downscaling operate in such a manner that block borders within the diminished frame are displaced from places where they were in the enlarged frame.

**3.** A method comprising:
upscaling an initial frame into an enlarged frame in such a manner that the pixel resolution of the enlarged frame is bigger than the pixel resolution of the initial frame;
video-compressing the enlarged frame into a compressed enlarged frame;
downscaling the compressed enlarged frame into a diminished frame in such a manner that the pixel resolution of the diminished frame is smaller than the pixel resolution of the enlarged frame; and
video-compressing the diminished frame into a compressed diminished frame.

**4.** The method of claim 3, further comprising:
performing the upscaling and downscaling in such a manner that block borders within the diminished frame are displaced from places where they were in the enlarged frame.

**5.** A computer program comprising program instructions which, when loaded into an apparatus, cause the apparatus to perform the process of claim 3 or 4.
